Europäisches Patentamt

European Patent Office

Office européen des brevets

(19)

(11) EP 1 024 897 B1

(12) FASCICULE DE BREVET EUROPEEN

(45) Date de publication et mention
de la délivrance du brevet:
**05.03.2003 Bulletin 2003/10**

(51) Int Cl.⁷: **B01J 27/24**, C04B 38/00

(21) Numéro de dépôt: **98949036.2**

(22) Date de dépôt: **09.10.1998**

(86) Numéro de dépôt international:
**PCT/FR98/02175**

(87) Numéro de publication internationale:
**WO 99/020390 (29.04.1999 Gazette 1999/17)**

(54) **PROCEDE DE REACTION CHIMIQUE CATALYTIQUE**

VERFAHREN FÜR EINE CHEMISCHE KATALYTISCHE REAKTION

METHOD FOR CATALYTIC CHEMICAL REACTION

(84) Etats contractants désignés:
**AT BE CH CY DE DK ES FI FR GB GR IE IT LI LU
MC NL PT SE**

(30) Priorité: **16.10.1997 FR 9713194**

(43) Date de publication de la demande:
**09.08.2000 Bulletin 2000/32**

(73) Titulaire: **CENTRE NATIONAL DE
LA RECHERCHE SCIENTIFIQUE
75016 Paris Cédex (FR)**

(72) Inventeurs:
• **BERTOLINI, Jean-Claude
F-69100 Villeurbanne (FR)**
• **MASSARDIER, Jean
F-69100 Villeurbanne (FR)**
• **METHIVIER, Christophe
94300 Vincennes (FR)**
• **CHAIZE, Estelle
Cambridge CB4 3LP (GB)**

(74) Mandataire: **Guerre, Dominique et al
Cabinet Germain et Maureau,
12, rue Boileau,
BP 6153
69466 Lyon Cedex 06 (FR)**

(56) Documents cités:
**EP-A- 0 712 820          EP-A- 0 757 024
GB-A- 1 426 216          US-A- 5 004 709**

• **DATABASE WPI Section Ch, Week 9632 Derwent
Publications Ltd., London, GB; Class J04, AN
96-311932 XP002071851 & JP 08 135916 A
(CHIYODA CORP)**

**Description**

La présente invention concerne un procédé de réaction chimique catalytique à haute température, qui utilise un catalyseur solide comprenant une phase métallique active, et un support catalytique réfractaire non oxydé sur lequel la-phase active est déposée.

Plus particulièrement, le support catalytique est à base de nitrure de silicium ($Si_3N_4$).

Le nitrure de silicium existe sous deux formes cristallines, la forme $\alpha$ ($\alpha$-$Si_3N_4$) dite forme basse température (< 1200°C) et la forme $\beta$ ($\beta$-$Si_3N_4$) dite forme haute température (> 1500°C). Entre 1200°C et 1500°C, les deux formes coexistent. Les structures de chacune de ces formes se distinguent essentiellement par un arrangement différent des tétraèdres $SiN_4$.

V.I. Simagina et al [1] ont décrit l'utilisation d'un catalyseur comprenant, à titre de support catalytique, du $\beta$-$Si_3N_4$ poreux sur lequel est dispersé de l'oxyde de nickel, pour la réaction d'oxydation du méthane. Pour obtenir un rendement de conversion satisfaisant, la température de réaction doit atteindre 850°C. En effet la stabilité de la molécule de méthane nécessite des températures d'amorçage de la réaction élevées. Mais l'utilisation de hautes températures entraîne la production indésirable de polluants comme le monoxyde de carbone provenant de la décomposition du dioxyde de carbone et/ou de l'oxydation partielle du méthane, et les oxydes d'azote provenant de l'oxydation de l'azote de l'air.

US-A-5 004 709 décrit un procédé d'obtention d'un support catalytique à base de nitrure de silicium comprenant en outre du fer et un oxyde de terre rare.

GB-1 426 216 enseigne un catalyseur pour le traitement des gaz d'échappement dont le support est constitué de nitrure de silicium.

Les auteurs de la présente invention ont recherché un catalyseur suffisamment actif pour catalyser des réactions du type précité, mais permettant d'en abaisser la température pour supprimer les inconvénients mentionnés ci-dessus, tout en possédant une grande stabilité et une forte réactivité dans des conditions particulièrement sévères, à savoir atmosphère oxydante et forte exothermicité.

Ainsi, ils ont découvert, pour la combustion d'un hydrocarbure, qu'un catalyseur solide comprenant une phase métallique active, et un support catalytique réfractaire comprenant principalement du nitrure de silicium dans sa forme $\alpha$, permet d'abaisser et contrôler la température de réaction à une valeur comprise entre 200°C et 800°C, et de préférence entre 200°C et 600°C.

Le nitrure de silicium est à l'état non poreux et pulvérulent.

Avant de décrire plus en détail la présente invention, certains termes employés sont ci-après définis.

Par "non poreux", on entend un matériau qui ne présente pas de cycle d'hystérésis dans les isothermes d'adsorption/désorption d'azote à la température de l'azote liquide.

Selon l'invention, le support comprend principalement du nitrure de silicium dans sa forme $\alpha$ ; ceci signifie qu'il est constitué au moins de 90 % de ladite forme, le reste pouvant notamment être la forme $\beta$ du nitrure de silicium.

Les variantes préférentielles du procédé de l'invention sont ci-après présentées :

- le support est avantageusement sous forme discrète, avec-une taille des particules comprise entre 0,1 et 1 µm ;
- la phase métallique active, c'est-à-dire catalytique, est notamment choisie parmi les métaux de transition, et consiste de préférence en du palladium,
- le procédé de l'invention est particulièrement adapté à la catalyse de réactions chimiques comme la réaction de combustion du méthane, en atmosphère oxydante, qui est illustrée dans les exemples qui suivront est avantageusement réalisée selon le procédé décrit ci-dessus,
- le support présente une aire spécifique de préférence comprise entre 5 et 20 $m^2$/g,
- le rapport de la proportion pondérale du métal de la phase active métallique, et notamment du palladium, à celle du silicium du support est avantageusement comprise entre 0,5 et 2 % en poids ,
- le catalyseur est de préférence obtenu par imprégnation du support par les sels acétylacétonate métalliques, puis activation, selon un protocole qui sera décrit plus loin.

Les détails et avantages de la présente invention sont maintenant illustrés dans les exemples 1 à 4 suivants, associés aux figures 1 à 8.

La figure 1 représente une cellule de décomposition dans laquelle le support imprégné des précurseurs de la phase métallique active subit un traitement thermique d'activation.

La figure 2 représente les schémas des différents programmes de température utilisés pour l'étape d'activation du catalyseur ; la figure 2A correspond à un traitement calcination-réduction et la figure 2B correspond à une décomposition sous argon.

La figure 3 représente les spectres obtenus par spectroscopie de photoémission X du nitrure de silicium testé ; la figure 3A correspond au niveau Si2p du $Si_3N_4$ et la figure 3B correspond au niveau N1s du $Si_3N_4$.

La figure 4 est un schéma du dispositif expérimental utilisé pour effectuer la combustion catalytique du méthane au cours de laquelle le catalyseur de l'invention est testé.

La figure 5 présente les courbes de conversion du méthane en fonction de la température en état 1 (♦) ou état 2 (■) du catalyseur Pd/Si$_3$N$_4$, selon que le catalyseur ait été activé sous argon (figure 5A) ou par calcination-réduction (figure 5B) ; les états 1 et 2 sont définis dans l'exemple 4.

La figure 6 présente les courbes de la conversion du méthane en fonction de la température pour les catalyseurs Pd (1,05 %)/α-Al$_2$O$_3$ (figure 6A) et Pd (0,75 %)/Si$_3$N$_4$ (Figure 6B) en état 1 (♦) ou en état 2 (■) définis à l'exemple 4.

La figure 7 présente les courbes de la conversion du méthane en fonction de la température pour les catalyseurs Pd (1,05 %)/α-Al$_2$O$_3$ (figure 7A) et Pd (0,75 %)/Si$_3$N$_4$ (Figure 7B) en état 1 (♦) ou en état 3 (Δ) définis à l'exemple 4.

La figure 8 présente les spectres en énergie des électrons 2p du silicium pour le catalyseur Pd (0,75%)/Si$_3$N$_4$ ayant subi différents traitements définis à l'exemple 4.

## EXEMPLE 1 : TECHNIQUES EXPERIMENTALES

1) Mesure de la surface spécifique des supports par la méthode BET

Brunauer, Emmet et Teller [2] ont mis au point une méthode permettant de -déterminer la surface spécifique d'un solide par adsorption physique. L'adsorption est régie par la loi :

$$\frac{P}{V(P_0\text{-}P)} = \frac{1}{CV_m} + \frac{P(C\text{-}1)}{CP0V_m}$$

avec

V : Volume adsorbé à la pression P,
Vm : Volume de gaz correspondant à la monocouche,
C : Constante (fonction de la chaleur d'adsorption),
P$_0$ : Pression de vapeur saturante du gaz dans les conditions de l'adsorption.

En portant P/P$_0$ en fonction de P/V(P$_0$-P) , on observe une droite (pour P/P$_0$ compris entre 0,05 et 0,35) dont la pente est 1/Vm lorsque C est grand devant 1 (cas de l'azote). Pour calculer la surface correspondant à la monocouche, on admet que la surface occupée par la molécule adsorbée est celle de la molécule à l'état liquide, soit 0,162 nm$^2$ pour l'azote à 77K. La relation qui donne la surface BET est alors, en utilisant l'azote comme adsorbat, S$_{BET}$(m$^2$/g) = 4,35Vm (cm$^3$/g).

La mesure BET a été utilisée pour mesurer la surface spécifique des nitrures de silicium en se servant de l'azote comme adsorbat à 77K à l'aide d'une technique volumétrique utilisant un appareil automatisé et informatisé, mis au point à L'Institut de Recherche sur la Catalyse (Villeurbanne, France). Avant chaque mesure, les échantillons sont traités sous vide secondaire (environ 10$^{-5}$ Torr) à 300°C afin de les dégazer.

2) Analyse structurale

2.1) Diffraction des rayons X

La diffraction des RX permet en premier lieu d'identifier les phases cristallines.

Les diffractogrammes de poudre sont effectués sur un goniomètre PHILIPS PW 1050/81 piloté par un micro-ordinateur. On utilise un générateur SIEMENS K710 avec un tube au cuivre et un monochromateur de graphite plan situé sur le faisceau. Ce dernier permet de sélectionner la longueur d'onde λCuKα = 0,154184 nm. Les données sont ensuite traitées au moyen d'un logiciel associé à la base de données ICCD-JCPDS.

L'élargissement des raies de diffraction permet de mesurer la taille moyenne Φ des cristallites à partir de la formule de SCHERRER :

$$\Phi = \frac{k\lambda}{B\cos\theta}$$

avec

k : constante de Scherrer,

$\lambda$ : longueur d'onde,

$\theta$ : angle de Bragg,

B : largeur intégrale du pic en radians.

2.2) Microscopie électronique en transmission à haute résolution

L'appareillage utilisé est un microscope de type JEOL 2010 avec une résolution ponctuelle de 0,19 nm. Les poudres à analyser sont mises en suspension dans l'éthanol et dispersées aux ultra-sons. Une goutte de cette suspension est déposée sur une grille porte-objet constituée par un tamis de cuivre recouvert d'un film mince de carbone (< 10 nm).

L'observation haute résolution consiste à créer des interférences entre les électrons transmis et diffractés par l'échantillon. Ces interférences se traduisent sur les clichés par l'apparition de franges parallèles correspondant aux familles de plans réticulaires en position de diffraction (plans quasiment parallèles au faisceau dans le cas de la diffraction électronique).

En pratique, un diaphragme permet de sélectionner les ondes qui serviront à la formation de l'image haute résolution. En général, il suffit de prendre l'onde transmise et deux ondes diffractées.

Par une mesure sur les clichés des distances entre franges et des angles entre familles de franges, il est possible d'identifier très localement les phases cristallines.

Cette technique permettra dans certain cas de déterminer la nature de l'interaction entre le support et la phase active, et la localisation des phases détectées par diffraction des RX.

3) Détermination de la dispersion

La dispersion d'un catalyseur métallique est le rapport du nombre d'atomes métalliques en surface au nombre total d'atomes métalliques présents sur le catalyseur. Elle permet donc de rapporter l'activité du catalyseur à celle des atomes de surface et donc accessibles au gaz.

3.1) Thermodésorption d'hydrogène

Basée sur l'utilisation de la spectrométrie de masse, cette technique permet de déterminer la quantité d'hydrogène chimisorbée par unité de masse de catalyseur. Elle permet de mesurer la dispersion par référence à un catalyseur de dispersion connue.

Après réduction à 400°C, les solides sont soigneusement dégazés à cette température puis ramenés à la température d'adsorption de l'hydrogène qui est de 25°C. Après adsorption d'hydrogène à saturation, les solides sont évacués à température ambiante jusqu'à l'obtention d'un vide de l'ordre de $10^{-8}$ Torr afin d'éliminer la phase simplement physisorbée et la phase hydrure de palladium. Le catalyseur est ensuite chauffé en programmation linéaire de température (400C.min$^{-1}$) et l'hydrogène thermodésorbé, qui correspond à l'hydrogène chimisorbé, est analysé en continu par spectrométrie de masse. L'intégration des pics de thermodésorption (m/e = 2) permet de calculer la quantité d'hydrogène adsorbé à partir de calibrations effectuées sur un catalyseur standard (Pd(0,41%)/SiO$_2$ dispersion = 0,75) et en supposant une stoechiométrie d'adsorption $H_{ads}/P_{ds} = 1$.

Les résultats de thermodésorption d'hydrogène sont exprimés par le rapport $N_H/N_{Pd}$ correspondant au rapport du nombre d'atomes d'hydrogène désorbé du catalyseur sur le nombre total d'atomes de palladium présents sur le catalyseur.

3.2) Microscopie électronique en transmission conventionnelle

L'appareillage utilisé est le même que celui de la haute résolution décrit en 2.2).

La microscopie électronique nous a permis une détermination statistique de la taille des particules métalliques. La quantification de la population des particules de palladium a été faite par catégorie de taille (histogramme de taille). On en déduit les diamètres $d_s$ des particules métalliques pondérés en surface suivant la relation :

$$d_s = \frac{\Sigma n_i d_i^3}{\Sigma n_i d_i^2}$$

ni représentant le nombre de particules de diamètre $d_i$.

Calcul de la dispersion à partir de $d_s$ :

A partir de $d_s$, on peut déterminer la surface métallique qui s'exprime dans l'hypothèse de particules sphériques par :

$$S \ (m^2/g) = \frac{6}{\mu \ d_s}$$

$\mu$ représentant la masse volumique du palladium.

Si on suppose que les plans les plus denses (plans (100), (110) et (111) de la maille cfc du palladium) sont exposés et en admettant une répartition homogène de ces plans, on peut déterminer le nombre d'atomes superficiels de métal occupant une unité de surface. Dans le cas du palladium, on a en moyenne $1,29.10^{19}$ atomes/$m^2$.

La dispersion est alors donnée par :

$$Dispersion = \frac{S \times 1,29.10^{19} \times M}{N_A}$$

avec

$M =$ masse molaire du Pd (106,4 g)
$N_A =$ $6,02.10^{23}$ atomes

ou encore

$$Dispersion = \frac{6 \times 1,29.10^{19} \times M}{\mu \times d_s \times N_A}$$

avec pour le palladium $\mu = 12,02 \ g/cm^3$
soit

$$Dispersion = \frac{1,13}{d_s} \quad (nm)$$

4) Caractérisation de la surface des catalyseurs par spectroscopie de photoémission X (XPS)

La spectroscopie de photoémission X ou XPS permet d'accéder directement à l'énergie de liaison des niveaux électroniques de coeur, cette énergie étant spécifique de l'atome considéré.

Principe :

L'échantillon à analyser est bombardé par un flux de photons X d'énergie $h\nu$. Les électrons arrachés du matériau sont émis avec une énergie cinétique Ec, ce qui permet de remonter à l'énergie de liaison El de l'élément considéré, d'après le principe de conservation de l'énergie :

$$h\nu = Ec + El + \Phi_{sp}$$

avec $\Phi_{sp}$ : travail d'extraction du spectromètre déterminé par calibration sur la raie $3d_{5/2}$ de l'argent qui a une énergie de liaison de 368,2 eV.

La modification de l'environnement chimique d'un élément se traduit par une modification de l'énergie de liaison des niveaux de coeur. Cette technique renseigne donc sur le degré d'oxydation des atomes à la surface du matériau.

L'XPS permet également une détermination des concentrations relatives des différents éléments dans les couches superficielles.

Appareillage:

Les expériences ont été effectuées sur l'appareil ESCALAB 200R (Fisons-Instrument).

La source d'excitation est le rayonnement $K\alpha_{1,2}$ du magnésium (1253,6 eV). Grâce à une valise de transfert, les catalyseurs peuvent être analysés après réduction dans un réacteur spécifique sans remise à l'air.

5) Test catalytique : Combustion catalytique du méthane

5.1) Introduction

De tous les hydrocarbures, le méthane est le plus difficile à oxyder **[4]**. En effet, l'énergie de liaison de la liaison C-H dans le méthane vaut 435 kJ/mole, alors que celle d'une liaison C-C dans les autres hydrocarbures est plus faible et vaut de 300 à 350 kJ/mole **[5]**. Cette stabilité de la molécule de méthane se traduit par des températures d'amorçage de la combustion supérieures pour le méthane à celles des autres alcanes.

La combustion conventionnelle réalisée à l'air en présence d'une flamme est un processus difficilement contrôlable qui conduit, outre la formation d'eau et de dioxyde de carbone, à des polluants comme le monoxyde de carbone et les oxydes d'azote. De plus, cette réaction ne peut se produire que pour un rapport hydrocarbure/air bien déterminé.

$$CH_4 + 2O_2 \rightarrow CO_2 + 2H_2O$$

$$DH^0_{298} = -802 \text{ kJ/Mole}$$

L'utilisation d'un catalyseur hétérogène permet d'abaisser la température de réaction, ce qui a pour conséquence de limiter la formation des gaz indésirables : monoxyde de carbone et oxydes d'azote. En effet, le monoxyde de carbone provient essentiellement de processus s'effectuant à haute température tels que la décomposition du dioxyde de carbone ou l'oxydation partielle du méthane. De même, l'oxydation de l'azote de l'air par l'oxygène est une réaction fortement endothermique qui ne se produit pas dans l'hypothèse où la réaction catalytique s'effectue à suffisamment basse température.

5.2) Dispositif expérimental

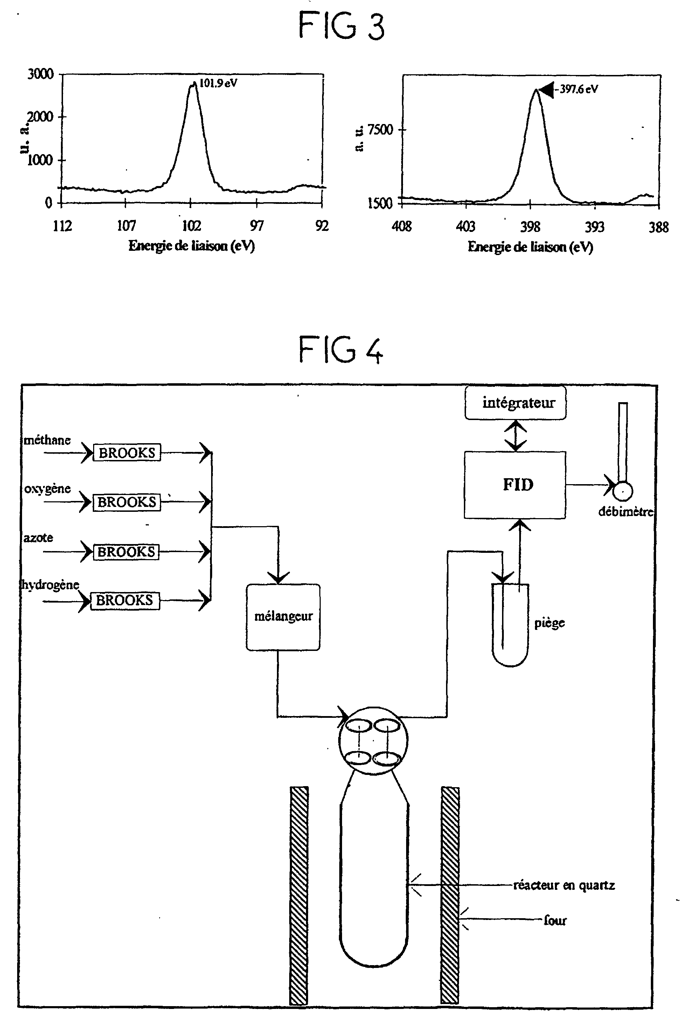

Les réactions se déroulent à pression atmosphérique dans un réacteur à lit fixe traversé en régime permanent par le mélange gazeux réactionnel. L'activité catalytique est mesurée pour de petites masses de catalyseur (300 mg), en présence d'un milieu réactionnel constitué de 1 % de méthane, 4 % d'oxygène et 95 % d'azote. L'utilisation de faibles masses de catalyseur et d'une forte dilution des réactifs dans un gaz inerte permet de minimiser les phénomènes d'emballement thermique liés à la forte exothermicité de la réaction de combustion du méthane. Le test catalytique est schématisé sur la figure 4.

Selon cette figure, la centrale de distribution des gaz comprend : azote, oxygène, méthane et hydrogène. L'hydrogène sert à la fois comme gaz de prétraitement des catalyseurs et comme gaz vecteur de la colonne du chromatographe. L'azote, l'oxygène et le méthane constituent le mélange réactionnel.

Les débits de gaz sont contrôlés par des débimètres massiques « BROOKS » qui travaillent à pression constante. La pression du système est maintenue par un manomètre situé à la sortie des chromatographes.

Le système de réaction est constitué par le mélangeur de gaz, la vanne 4 voies, le réacteur à lit fixe, le four avec programmateur et contrôle de température. Le réacteur en U à lit fixe en quartz de 2 cm de diamètre, comporte un fritté sur lequel est déposé le catalyseur. Les mesures de température dans le four et au niveau du lit catalytique sont effectuées au moyen de thermocouples. A la sortie du réacteur, un piège maintenu à -78°C par un mélange acétone-carboglace permet de retenir l'eau formée pendant la réaction qui peut endommager la colonne du chromatographe.

Le mélange réactionnel est injecté à intervalles de temps réguliers dans la colonne d'un chromatographe à ionisation de flamme (FID). Les injections sont effectuées automatiquement.

Le chromatographe FID possède une colonne « Carbosieve S » permettant une bonne séparation et résolution du méthane. Les oxydes de carbone, CO et $CO_2$, sont détectés en les transformant préalablement en méthane dans un four à méthaniser par passage sur un catalyseur Mi/MgO. Cette opération effectuée après séparation des différents gaz dans la colonne permet d'obtenir une bonne sensibilité pour la détection des produits de réaction CO et $CO_2$.

Le chromatogramme est obtenu sur un enregistreur. La surface des pics des différents produits est déterminée grâce à un programme d'intégration contenu dans l'unité centrale SP4000. L'analyse quantitative des différents produits est effectuée après un étalonnage sur un mélange de composition connue.

5.3) Conditions-opératoires

Le réacteur est chargé avec une masse de 0,3 g de catalyseur. Une analyse des gaz en début de réaction est toujours réalisée en court-circuitant le réacteur. Après stabilisation du mélange, les gaz sont envoyés sur le catalyseur préchauffé et l'analyse des produits est effectuée par injection automatique vers le chromatographe à des intervalles de 15 à 30 min.

Les conditions de test catalytique sont les suivantes :

| | |
|---|---|
| Domaine de température | 200°C-800°C |
| Pression partielle $CH_4$ | 7,64 Torr soit $10^{-2}$ atm |
| Pression partielle $O_2$ | 30,6 Torr soit $4.10^{-2}$ atm |
| Pression partielle $N_2$ | complément à 1 atm soit 0,95 atm |
| Débit total | 6,5 l/h |
| Masse de catalyseur | 300 mg |

5.4) Expression des résultats

a) Taux de transformation globale ou conversion (TTG)

Soient $P_0(CH_4)$ la pression partielle initiale de méthane, $P(CO_2)$ et $P(CO)$ les pressions partielles en $CO_2$ et en CO produits. Le taux de transformation globale s'exprime par :

$$TTG = \frac{P(CO_2) + P(CO)}{P_0(CH_4)} \times 100$$

TTG étant exprimé en % de méthane converti.

Cependant, cette expression de la conversion ne prend pas en compte les éventuelles modifications de la fluctuation du mélange réactionnel au cours du temps. Afin de s'affranchir de ce phénomène, la pression initiale de $CH_4$ sera calculée en fonction des pressions partielles de $CH_4$, CO et $CO_2$ dans les produits de réaction avec :

$$P_0(CH_4) = P(CH_4) + P(CO_2) + P(CO)$$

Le taux de transformation globale s'écrit alors :

$$TTG \ (en \ \%) = \frac{P(CO_2) + P(CO)}{P(CH_4) + P(CO_2) + P(CO)} \times 100$$

b) Expression de la vitesse

La vitesse exprimée en moles de $CH_4$ transformées par heure et par gramme de catalyseur est donnée par :

$$\nu_1 = TTG \times \frac{P_0(CH_4)}{760} \times \frac{D_T}{22,4} \times \frac{273}{298} \times \frac{1}{m}$$

avec

$P_0(CH_4)$ :     pression initiale de $CH_4$ en Torr,
$D_T$ :     débit total en l/h,
m :     masse de catalyseur en gramme.

Cette relation est valable dans le cas d'un réacteur à lit fixe travaillant en régime différentiel ; c'est à dire à faible conversion ou en présence d'une faible quantité de catalyseur.

La vitesse en moles de $CH_4$ transformées par heure et par mole de métal est donnée par :

$$\nu_2 = TTG \times \frac{P_0(CH_4)}{760} \times \frac{D_T}{22,4} \times \frac{273}{298} \times \frac{M}{m} \times \frac{1}{W}$$

avec

M : masse du molaire du palladium (106,4 g),
W : teneur massique en palladium.

c) Activité par site superficiel

L'activité par site superficiel ou « Turn Over Frequency (TOF) » est définie comme le nombre de molécules de méthane qui a réagi par unité de temps et par atome de métal de surface. La définition originale [6] se réfère au nombre de sites superficiels. Cependant le site actif dans la réaction d'oxydation du méthane n'est pas encore bien connu : c'est pourquoi on choisit de calculer le TOF par rapport au nombre d'atomes métalliques superficiels.

$$TOF \ (en \ h^{-1}) = \frac{\nu_2}{D}$$

D représentant la dispersion du catalyseur déterminée par microscopie ou thermodésorption d'hydrogène

## EXEMPLE 2 : CARACTERISATION DU NITRURE DE SILICIUM TESTE

Le nitrure de silicium utilisé ($Si_3N_4$, GOODFELLOW) est sous forme pulvérulente, non poreuse, et présente une surface spécifique déterminée par la méthode BET décrite à l'exemple 1, 1), de 8,8 $m^2$/g.

Son spectre de diffraction X (technique décrite à l'exemple 1, 2.1)) met en évidence la présence de la phase $\alpha$-$Si_3N_4$ qui présente une structure hexagonale de paramètres de maille a = b = 0,7752 nm, c = 0,562 nm. L'autre phase ($\beta$) du nitrure de silicium est également observée, mais en très faible quantité.

La caractérisation de surface par XPS a été effectuée selon la technique décrite à l'exemple 1, 4).

Le nitrure de silicium utilisé étant un mauvais conducteur électrique, un décalage de quelques eV vers les hautes énergies a été observé sur toutes les raies de chaque spectre. Cet effet de charge global est dû à la mauvaise conduction des électrons dans l'échantillon analysé. Les charges alors créées pendant le processus de photoémission ne sont pas neutralisées et il y a accumulation de charges à la surface du matériau.

Les corrections d'effet de charge sont effectuées en prenant, comme référence, l'énergie de liaison du niveau N1s à 397,6 eV pour le $Si_3N_4$ (énergie caractéristique de l'azote dans $Si_3N_4$ [7]).

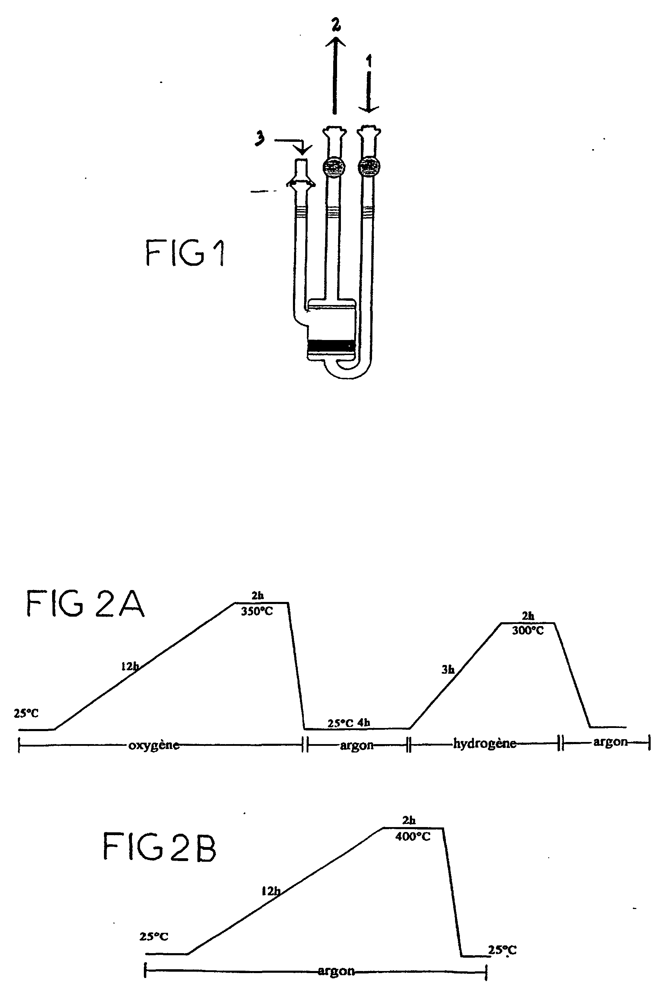

Les niveaux Si2p et N1s du $Si_3N_4$ sont représentés respectivement sur les figures 2A et 2B. Le pic Si2p très étroit indique un seul état du silicium correspondant au silicium du nitrure à 101,9 eV. Une faible quantité d'oxygène est observée dont le niveau 1s sort à 532,4 eV. Le rapport $[O_s]/[Si_s]$ est de 0,2. Le rapport $[N_s]/[Si_s]$ est proche de 1. La stoechiométrie globale $([O_s]+ [N_s])/[Si_s]$ est de 1,2, donc très proche de la stoechiométrie théorique de 1,33. Dans le cas du nitrure de silicium, la stoechiométrie de la surface est généralement considérée identique à celle du volume [8]. L'oxygène détecté en XPS appartient donc à la structure de la phase $\alpha$ du nitrure de silicium et il n'y pas de $SiO_2$.

## EXEMPLE 3 : PREPARATION ET CARACTERISATION D'UN CATALYSEUR DE L'INVENTION

1) Préparation des catalyseurs

Les catalyseurs ont été préparés selon la technique qui utilise comme précurseur l'acétylacétonate de palladium $Pd(C_5H_7O_2)_2$.

Le support de nitrure de silicium est dans un premier temps imprégné des sels métalliques. A la suite de l'étape d'imprégnation, un traitement thermique est nécessaire, d'une part pour éliminer le ligand et d'autre part pour obtenir le métal réduit. A cet effet, trois traitements thermiques ont été retenus et dont les conditions ont été fixées par la littérature et par une étude effectuée au laboratoire sur la décomposition de l'acétylacétonate de palladium [9].

Ces traitements sont :

- une calcination à 350°C sous un flux d'oxygène suivie d'une étape de réduction,
- un chauffage à 400°C sous un flux d'argon,
- une réduction directe à 400°C sous hydrogène.

1.1) Imprégnation

Pour l'imprégnation du nitrure de silicium, on procède aux étapes suivantes :

- le complexe acétylacétonate de palladium est dissous à chaud dans du toluène à environ 80°C ; cette étape prend environ 1 heure ;
- le nitrure de silicium est ensuite mis au contact de cette solution et l'ensemble est maintenu sous agitation à température ambiante ; lors de cette étape s'effectuant sous hotte, le toluène s'évapore très lentement et le complexe acétylacétonate recristallise à la surface du nitrure de silicium ; l'évaporation totale sous hotte de 100 ml de toluène nécessaire à la solubilisation de 1 g d'acétylacétonate dure environ 20 heures.
- le solide est par la suite séché à 80°C sous vide primaire pendant 15 heures ;

Deux préparations mettant en jeu des quantités différentes de palladium ont été effectuées. Le pourcentage de palladium pour ces imprégnations est présenté dans le tableau 1 suivant.

## TABLEAU 1

| | Masse de $Pd(C_5H_7O_2)_2$ utilisée pour la préparation | % massique de Pd théorique pour 5 g de $Si_3N_4$ | % massique de Pd effectivement fixé (analyse chimique) |
|---|---|---|---|
| Préparation 1 sur $Si_3N_4$ | 0,2 g | 1.5 % | 1.43 % |
| Préparation 2 sur $Si_3N_4$ | 0,15 g | 1 % | 0,75 % |

1.2) Traitement thermique d'activation

Le support imprégné des précurseurs doit subir un traitement thermique d'activation nécessaire à l'élimination du ligand et à l'obtention du métal réduit. Cette étape est la plus importante car elle conditionne la croissance des particules de palladium à la surface du support et par conséquent définit les caractéristiques finales du catalyseur.
Le traitement thermique le plus couramment préconisé pour l'élimination du ligand consiste en une calcination sous oxygène. De précédentes études menées au laboratoire par analyse thermogravimétrique [9] ont montré que la totalité des ligands était décomposée sous oxygène à 350°C. Suite à ce traitement, il est nécessaire d'effectuer une réduction pour que le palladium soit actif. Le palladium est réductible déjà à température ambiante. On a cependant choisi une température de 300°C pour éviter toute ambiguïté sur l'état final du palladium (cf figure 2A).
L'argon permet également d'effectuer simultanément l'étape de décomposition et de réduction. La réduction du métal dans cette condition s'explique par la présence de nombreux atomes d'hydrogène dans la molécule de Pd $(C_5H_7O_2)_2$, qui, lors de la décomposition, se recombinent et créent ainsi un milieu fortement réducteur dans l'environnement du métal (cf figure 2B).
Sous argon, l'acétylacétonate de palladium se décompose entre 100°C et 200°C [9]. Cependant, on a opté pour une température plus élevée (400°C) afin d'achever complètement la décomposition et la réduction de l'ascendant catalytique.

Mode opératoire :

Environ 1 g d'échantillon est placé dans une cellule en quartz 3 branches, représentée sur la figure 1, où la référence (1) indique la branche d'entrée des gaz, la référence (2) indique la branche de sortie des gaz ou de vide et la référence (3) indique la branche d'introduction de l'échantillon. Le débit gazeux est de 2 cm$^3$/s créant de bas en haut un lit fluidisé. Les différents gaz utilisés sont préalablement séchés sur zéolithe. La cellule sous balayage est positionnée dans un four thermostaté avec une montée en température programmable.

Les différents programmes de température utilisés sont schématisés sur la figure 2 sur laquelle la figure 2A correspond au traitement calcination-réduction et la figure 2B à la décomposition sous argon.

2.2) Caractérisation des catalyseurs Pd/Si$_3$N$_4$

Caractérisation granulométrique

L'observation en microscopie a été effectuée sur le matériau présentant le plus faible pourcentage de palladium (0,75 % de palladium).

Le traitement de calcination-réduction conduit à une large distribution de taille des particules de palladium. Cependant une grande proportion des particules a un diamètre inférieur à 4 nm. La plus grande taille observée pour ce catalyseur atteint environ 20 nm.

Après décomposition sous argon, le palladium est beaucoup plus homogène en taille. La gamme est comprise entre 1 et 7 nm et la taille moyenne reste voisine de celle obtenue après calcination-réduction.

Caractérisation par thermodésorption d'hydrogène

Les résultats de thermodésorption d'hydrogène sont présentés dans le tableau 2 ci-après, pour les matériaux provenant des deux imprégnations et ayant subi les différents traitements thermiques d'activation. Le diamètre moyen des particules observées en microscopie et la dispersion théorique correspondante sont également reportés.

## TABLEAU 2

| Traitement thermique | % Pd | $N_H/N_{pd}$ | Dispersion D |
|---|---|---|---|
| calcination-réduction | 0,75 % | 0,32 (3.5nm) | 0,24 |
| | 1.43% | 0,17 (6.7nm) | - |
| | | | - |
| décomposition sous argon | 0,75 % | 0,09 | 0,28 |
| | 1.43% | 0,09 | - |
| | | | - |

(*) diamètre moyen déduit du résultat de thermodésorption d'hydrogène $d_s = 1,13/(N_H/N_{Pd})$

Le traitement d'activation sous argon conduit vraisemblablement à une contamination du palladium par le carbone provenant du ligand acétylacétonate, ce qui pourrait expliquer les faibles valeurs mesurées du rapport $N_H/N_{Pd}$.

Après calcination-réduction, les catalyseurs présentent une plus grande aptitude à chimisorber l'hydrogène. Dans le cas du matériau à faible pourcentage de palladium, le rapport $N_H/N_{Pd}$ est supérieur à la dispersion théorique du catalyseur déterminée par microscopie. On peut néanmoins considérer que le rapport NH/NPd est représentatif de la dispersion du catalyseur.

Dans l'hypothèse de particules sphériques, le catalyseur à 1,43 % de palladium calciné-réduit aurait d'après le résultat de thermodésorption, une taille moyenne des particules -métalliques de 6,7 nm résultant de l'équation

$$d_s = \frac{1,13}{N_H/N_{Pd}}$$

Caractérisation structurale par diffraction des rayons X

En raison de l'importante densité de raies de diffraction due à la structure du nitrure de silicium, il est impossible de caractériser la phase métallique par diffraction des rayons X.

Caractérisation de la surface par XPS

Les énergies de liaison présentées ont été corrigées de l'effet de charge, induit par le caractère isolant du nitrure de silicium, en se référant à l'énergie de liaison des électrons 1s de l'azote dans $Si_3N_4$ à 397,6 eV [7].

a) Evolution de la surface du support (Niveau Si2p) après calcination-réduction

L'énergie de liaison des électrons 2p du silicium à 101,9 eV après imprégnation et calcination-réduction est identique à celle du nitrure de silicium sans métal. On n'observe pas de deuxième état dû à l'oxyde de silicium.
De même, la décomposition sous argon n'entraîne pas de modifications de la surface du nitrure de silicium.

b) Etat physico-chimique du palladium déposé sur nitrure de silicium

On constate que le rapport des concentrations $[Pd_s]/[Si_s]$ déduit des mesures de photoémission (XPS) est voisin de 0,05 pour les deux modes d'activation des catalyseurs, et d'autre part qu'il évolue peu lorsqu'on augmente le pourcentage massique de palladium de 0,75 à 1,43%. On peut considérer que le signal du silicium reste constant en sachant que le taux de couverture en palladium est faible dans tous les cas (on a l'équivalent de 0,4 monocouche dans le cas dû catalyseur à 0,75% de palladium et 0,7 monocouche pour celui à 1,43%).
Dans ces conditions, on peut conclure que la morphologie des particules de palladium a très probablement un aspect bidimensionnel pour la faible teneur en palladium, et que seule la hauteur des particules augmente avec le pourcentage de métal déposé.

TABLEAU 3

| Energies de liaison des électrons 3d5/2 du palladium déterminées par XPS | | |
|---|---|---|
| **Traitement thermique** | **% Pd** | **Energie de liaison (électrons 3d$_{5/2}$)** |
| calcination-réduction | 0,75 %<br>1,43 % | 336.1 eV<br>335.7 eV |
| décomposition sous argon | 0,75 %<br>1,43% | 335.6 eV<br>335.2 eV |

Le tableau 3 présente les énergies de liaison du palladium des différents catalyseurs étudiés. A l'exception du catalyseur à fort pourcentage de palladium décomposé sous argon, les énergies de liaison des électrons 3d5/2 du palladium sont supérieures à celles habituellement reportées dans la littérature pour du palladium métallique, soit 335,2 eV ou 335,3 eV.
Les catalyseurs étant stockés à l'air libre, on a vérifié dans un premier temps sur le catalyseur présentant la plus forte énergie de liaison (catalyseur calciné-réduit à 0,75 % de palladium), si le palladium est bien réduit.
Pour cela une deuxième analyse après une réduction à 400°C et sans remise à l'air, a été effectuée. Cette opération s'effectue au moyen d'une valise de transfert permettant de relier le four de réduction à la chambre XPS. L'énergie de liaison des électrons 3d5/2 de 336 eV n'a pratiquement pas été modifiée par ce traitement, indiquant que le palladium n'était pas oxydé.
Cet écart non négligeable pourrait alors être expliqué par un effet de taille. En effet, il a déjà été observé que des petites particules ont des énergies de liaison plus élevées que des grosses.
Dans le cas des présents catalyseurs dont le diamètre moyen est supérieur à 3 nm, il semblerait que l'augmentation de l'énergie de liaison ne soit pas entièrement due à un effet de taille.
Cet effet de charge peut alors être expliqué par des phénomènes électroniques d'interactions entre le métal et le nitrure de silicium. On peut en effet supposer que s'il y a déplacement d'électrons de l'interface palladium-nitrure de silicium vers le nitrure de silicium, il y aura création de charges positives sur la particule métallique. Dans l'hypothèse où ces charges sont délocalisées sur la surface de la particule, cela conduirait à une augmentation de l'énergie de liaison mesurée en XPS.

Un autre phénomène pour expliquer le déplacement pourrait être un effet mécanique d'interaction entre le nitrure de silicium et le palladium qui conduirait à une modification structurale de ce dernier, qui pourrait entraîner des modifications de ses propriétés électroniques.

c) Concentration relative de carbone à la surface

Le tableau 4 ci-après présente les énergies de liaison des électrons C1s et les concentrations relatives en carbone à la surface des différents catalyseurs.

TABLEAU 4

| Energies de liaison des électrons 1s du carbone et rapport des concentrations $[C_s]/[Si_s]$ détecté en XPS | | | |
|---|---|---|---|
| **Traitement thermique** | **% Pd** | **Energie de liaison (électrons 1s)** | **$[C_s]/[Si_s]$** |
| calcination-réduction | 0,75 % | 284.7 eV | 0,083 |
| | 1.43% | 284.7 eV | 0,087 |
| décomposition sous argon | 0,75 % | 284.6 eV | 0,14 |
| | 1.43% | 284.7 eV | 0,37 |

Les deux matériaux décomposés sous argon ont un taux de carbone supérieur à ceux calcine-réduit. Ce résultat confirme le fait que l'activation des catalyseurs sous argon laisse un dépôt carboné à la surface. La quantité de carbone dépend de la quantité d'acétylacétonate de palladium mis en jeu dans la préparation. Ce dépôt carboné conduit à une diminution du nombre de sites actifs à la surface du catalyseur comme observé grâce à la thermodésorption d'hydrogène.

**EXEMPLE 4 : REACTIVITE DES CATALYSEURS Pd/Si$_3$N$_4$ ET COMPARAISON AVEC UN CATALYSEUR Pd/ $\alpha$-Al$_2$O$_3$**

On a d'abord vérifié qu'il y a très peu de différence d'activité selon qu'on utilise les catalyseurs Pd/Si$_3$N$_4$ activé sous argon ou par calcination-réduction.

Ensuite on a comparé l'activité du catalyseur Pd/Si$_3$N$_4$ à celle d'un catalyseur Pd/$\alpha$-Al$_2$O$_3$, plus conventionnel, à l'issue de différentes conditions de réaction.

Les différences de comportement seront ci-après discutées en liaison avec l'évolution des propriétés physico-chimiques des deux solides.

1) Conditions de prétraitement des catalyseurs.

L'activité est mesurée pour trois états initiaux des catalyseurs :

Etat 1 : catalyseur initial, réduit à 500°C sous hydrogène,
Etat 2 : catalyseur réduit à 500°C et traité à 600°C pendant 1 heure en présence du mélange réactionnel (1% de méthane et 4% d'oxygène dans l'azote),
Etat 3 : catalyseur réduit et traité à 800°C pendant 3 heures en présence du mélange réactionnel précédemment défini.

Toutes les montées en température sont effectuées linéairement au rythme de 1°C/min Après chaque traitement, les solides sont purgés sous azote pendant 30 minutes à la température de traitement.

L'ensemble des conditions du test catalytique (débits et pressions partielles) est défini dans l'exemple 1,5).

2) Activité des catalyseurs Pd/Si$_3$N$_4$ en état 1 et 2 : Influence du mode préparation

L'activité catalytique est mesurée en fonction de la température en état 1 et 2 sur les solides présentant 0,75 % de palladium.

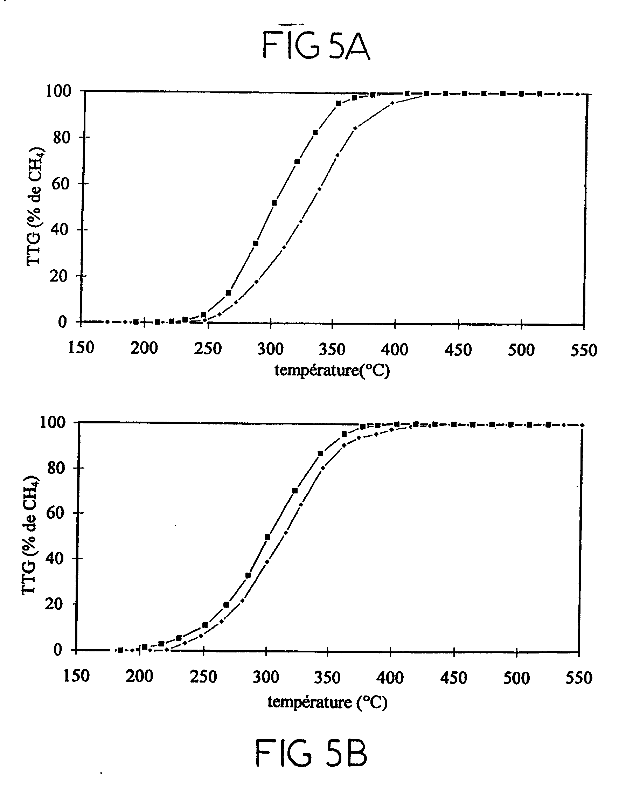

La figure 5 présente la conversion en fonction de la température du catalyseur activé sous argon (figure 5A) et du catalyseur calciné-réduit (figure 5B).

Dans les deux cas et pour les deux états des solides, aucune émission de monoxyde de carbone n'a été observée dans le domaine de mesure.

La conversion de méthane est sensiblement supérieure en état 1 pour le catalyseur calciné-réduit. Il présente en effet une température de demi-conversion de 314°C tandis que le catalyseur activé sous argon atteint la demi-conversion à 329°C.

En état 2, les deux catalyseurs sont plus actifs par rapport à l'état 1 et leur température de demi-conversion, de l'ordre de 300°C, est identique.

Il existe donc très peu de différence de comportement suivant qu'on utilise un catalyseur calcine-réduit ou activé sous argon. La plus faible activité en état 1 observée sur le solide dont l'acétylacétonate a été décomposé sous argon s'explique par la présence de résidus carbonés sur le palladium. Ces résidus sont éliminés en cours de réaction en atmosphère oxydante, pour retrouver en état 2 une activité identique à celle du catalyseur calcine-réduit.

En raison des faibles différences observées, on utilisera indifféremment l'un ou l'autre des catalyseurs dans l'étude de comparaison avec le catalyseur au palladium déposé sur alumine.

3) Etude de la réactivité d'un catalyseur $Pd/Si_3N_4$ comparée à celle d'un $Pd/\alpha-Al_2O_3$

On a choisi une alumine (support de catalyseur largement utilisé dans le domaine de la combustion) sous la forme allotropique $\alpha$, qui est la forme la plus stable, pour s'affranchir des problèmes de transitions de phase pouvant avoir lieu à des températures de l'ordre des températures de réaction. De plus, ce matériau permet de se placer dans les mêmes conditions de surface spécifique que celles du nitrure de silicium. L'alumine utilisée est un produit Rhône Poulenc avec une surface spécifique de 10,5 $m^2/g$.

Préparation et caractéristiques du catalyseur $Pd/\alpha-Al_2O_3$

Le catalyseur $Pd/\alpha-Al_2O_3$ a été préparé dans les mêmes conditions que les catalyseurs testés, à savoir, par imprégnation par l'acétylacétonate de palladium et l'activation a été effectuée par un traitement classique de calcination-réduction, tel que décrit dans l'exemple 3. L'ensemble des caractéristiques du catalyseur est résumé dans le tableau 5 où, à titre de comparaison, sont également reportées les caractéristiques du catalyseur $Pd(0,75\%)/Si_3N_4$ calciné-réduit.

## —TABLEAU 5
## Caractéristiques des catalyseurs $Pd/\alpha-Al_2O_3$ et $Pd/Si_3N_4$

| | pourcentage de palladium | Dispersion (thermodésorption d'hydrogène) | XPS : énergie de liaison des électrons Pd $3d_{5/2}$ |
|---|---|---|---|
| catalyseur $Pd/\alpha-Al_2O_3$ | 1,05 % | 0,41 % → ds=2,8 nm | 335,1 eV -> Pd zérovalent |
| catalyseur $Pd/Si_3N_4$ | 0,75 % | 0,32 → ds=3,5 nm | 336,1 eV |

Le catalyseur $Pd/\alpha-Al_2O_3$ présente une dispersion sensiblement supérieure au $Pd/Si_3N_4$. L'énergie des électrons 3d5/2 du palladium mesurée en XPS est caractéristique du palladium à l'état zérovalent. Dans le cas du catalyseur $Pd/Si_3N_4$, les propriétés électroniques du palladium sont modifiées probablement par des effets d'interaction avec le support.

Réactivité des catalyseurs en état 1 et 2

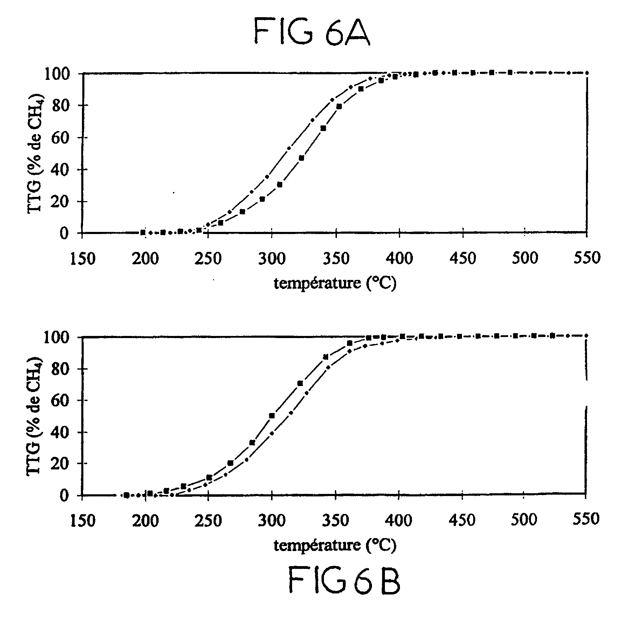

La figure 6 présente la conversion du méthane en fonction de la température pour les catalyseurs $Pd/\alpha-Al_2O_3$ et $Pd/Si_3N_4$ en état 1 et 2.

Les deux catalyseurs se comportent différemment. En effet, le catalyseur supporté sur nitrure de silicium est plus actif lorsqu'il est en état 2, tandis que le solide $Pd/\alpha-Al_2O_3$ présente une désactivation après un traitement sous le mélange réactionnel jusqu'à 600°C.

Les températures de demi-conversion pour le $Pd/\alpha-Al_2O_3$ sont de 310°C et 325°C respectivement en état 1 et 2. Celles du $Pd/Si_3N_4$ sont de 314°C et 300°C.

Réactivité des catalyseurs en état 3

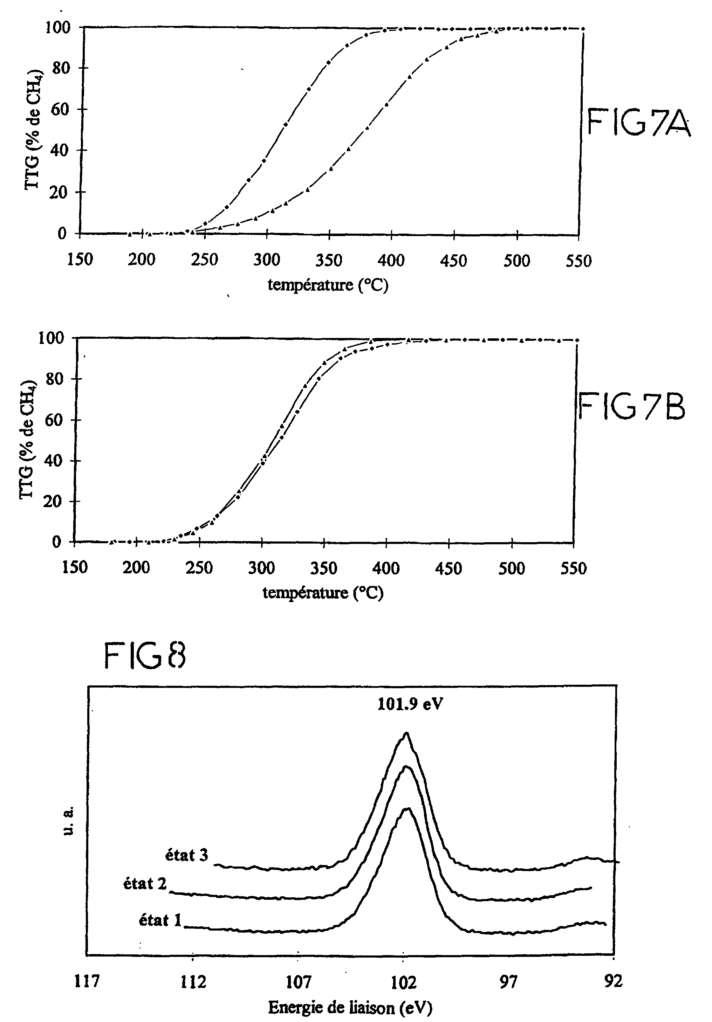

La figure 7 présente la conversion du méthane en fonction de la température pour les catalyseurs en état 1 et 3.

L'examen de ces courbes indique que le solide Pd/$\alpha$-Al$_2$O$_3$ devient beaucoup moins actif après un traitement thermique à 800°C sous le mélange réactionnel, tandis que le catalyseur Pd/Si$_3$N$_4$ est activé lorsqu'il est en état 3. Il garde à peu près la même activité que lorsqu'il est en état 2.

Les catalyseurs Pd/$\alpha$-Al$_2$O$_3$ et Pd/Si$_3$N$_4$ ont des températures respectives de demi-conversion en état 3 de 375°C et 307°C.

Activité par atome métallique de surface dans les 3 états

Pour calculer l'activité par atome métallique superficiel, on a utilisé la dispersion de la phase active déterminée par thermodésorpion d'hydrogène.

Pour l'activité des catalyseurs en état 2 et 3, le calcul a été effectué à partir de la dispersion mesurée après les différents tests de réactivité.

Les valeurs de dispersion pour les catalyseurs frais et vieillis sont présentées dans le tableau 6. L'examen de ce tableau indique que la perte de surface métallique est quasiment identique pour les deux solides.

TABLEAU 6

| Dispersions des catalyseurs dans les différents états | | | |
|---|---|---|---|
| **catalyseur** | **état 1** | **état 2** | **état 3** |
| Pd/$\alpha$-Al$_2$O$_3$ | 0,41 | 0,25 | 0,1 |
| Pd/Si$_3$N$_4$ | 0,32 | 0,25 | 0,12 |

L'activité par site superficiel en fonction de la température déterminée en fonction de la température des deux solides pour les trois états montrent que les atomes métalliques de surface du catalyseur supporté sur nitrure de silicium sont plus actifs que ceux du solide Pd/$\alpha$-Al$_2$O$_3$ quel que soit l'état.

Le tableau 7 reporte les activités à 250°C des deux solides pour chaque état. On constate que le catalyseur supporté sur alumine présente sensiblement la même activité en état 1, 2 et 3. La diminution de la quantité de méthane converti en état 2 et 3 par rapport au solide frais s'explique simplement par la perte de surface métallique par frittage.

Les atomes de palladium de surface du catalyseur supporté sur nitrure de silicium deviennent de plus en plus actifs au fur et à mesure des tests de vieillissement et ce, malgré un frittage du palladium. L'effet est très marqué lorsque le solide passe de l'état 1 à l'état 2.

TABLEAU 7

| Activités des catalyseurs à 250°C | | |
|---|---|---|
| **Pd(1.05%)/$\alpha$-Al$_2$O$_3$ (TOF à 250°C)** | | |
| état 1 | état 2 | état 3 |
| 11 h$^{-1}$ | 12 h$^{-1}$ | 16.5 h$^{-1}$ |
| **Pd(0,75%)/Si$_3$N$_4$ (TOF à 250°C)** | | |
| état 1 | état 2 | état 3 |
| 24 h$^{-1}$ | 40 h$^{-1}$ | 46 h$^{-1}$ |

Résumé des résultats de réactivité

Dans le domaine de température où est mesurée l'activité, les deux catalyseurs ont 100 % de sélectivité en dioxyde de carbone, et ce, quelque soit le traitement initial qu'on leur applique.

Le tableau 8 présente les températures de demi-conversion du méthane pour chacun des catalyseurs dans tous les états.

En état 1, la température de demi-conversion est presque la même suivant qu'on utilise l'un ou l'autre des solides.

Après les traitements initiaux sous le mélange réactionnel, le solide Pd/$\alpha$-Al$_2$O$_3$ présente moins d'aptitude que le Pd/Si$_3$N$_4$ à réaliser la réaction d'oxydation du méthane. La perte de surface métallique mesurée par thermodé-

**14**

sorption d'hydrogène, sensiblement identique pour les deux solides, montre que les sites à la surface du $Pd/Si_3N_4$ sont les plus actifs.

Il existe donc un effet de support assez important sur l'activité du palladium vis à vis de l'oxydation du méthane.

## TABLEAU 8

### Températures de demi-conversion du méthane pour les catalyseurs dans les différents états

| | Températures de demi-conversion | | |
|---|---|---|---|
| | ETAT 1 | ETAT 2 | ETAT 3 |
| Pd(1,05%)/ α-Al₂O₃ | 310°C | 325°C | 375°C |
| Pd(0,75%)/ Si₃N₄ | 314°C | 300°C | 307°C |

Caractérisation des catalyseurs après réaction

Afin d'essayer de comprendre les différences d'activité observées, les deux catalyseurs $Pd/\alpha$-$Al_2O_3$ et $Pd/Si_3N_4$ sont caractérisés après les tests de réactivité en état 2 et en état 3. On observe en particulier les différences de comportement au frittage, les évolutions de l'état électronique du palladium et le comportement à l'oxydation de la surface du nitrure de silicium.

Comportement au frittage

En microscopie, on fait les observations suivantes :

- en état 1, les distributions sont centrées sur la gamme 3-4 nm pour les catalyseurs frais ;
- en état 2, les deux catalyseurs ont pratiquement le même histogramme de taille ; les deux solides frittent donc de la même façon jusqu'à 600°C sous le mélange réactionnel ; les distributions centrées sur la gamme 3-4 nm pour les catalyseurs en état 1 sont déplacées sur la gamme 4-5 nm ;
- en raison de la forte hétérogénéité des tailles de particules observées en état 3, les distributions n'ont pu être effectuées avec la même précision qu'en état 1 et 2 ; le solide $Pd/Si_3N_4$ semble présenter un meilleur comportement au frittage ; les tailles sont en majorité inférieures à 10 nm ; aucune particule de diamètre supérieur à 30 nm n'a été observée.

La distribution de taille du palladium supporté sur alumine s'étend au delà de 30 nm et le diamètre maximum observé est de l'ordre de 50 nm.

Jusqu'à 600°C, le frittage est quasiment identique pour les deux catalyseurs. Après vieillissement jusqu'à 800°C, le palladium supporté sur nitrure de silicium présente une meilleure résistance au frittage. En effet, contrairement au solide $Pd/\alpha$-$Al_2O_3$, on n'observe pas de particules ayant un diamètre supérieur à 30nm.

Caractérisation par spectroscopie de photoélectrons

- Comportement à l'oxydation du nitrure de silicium

Les spectres en énergie des électrons 2p du silicium pour les catalyseurs ayant subi les différents traitements de vieillissement sont présentés sur la figure 8. L'effet de charge a été corrigé en prenant comme référence l'énergie des électrons 1s de l'azote dans $Si_3N_4$ à 397.6 eV.

Après les traitements de vieillissements (états 2 et 3) sous le mélange réactionnel, les spectres énergétiques des électrons 2p du silicium ne sont pas modifiés par rapport à celui de l'état 1 indiquant qu'il n'y a probablement pas d'oxydation de la surface du nitrure de silicium.

Les concentrations relatives en azote et en oxygène sont regroupées dans le tableau 9.

Une légère augmentation de la quantité d'oxygène en état 3, qui peut être imputable à l'apparition d'oxyde de palladium au cours du traitement, est observée. Cependant, cette augmentation qui s'effectue au détriment de la concentration en azote semble indiquer que la surface du nitrure de silicium commence à s'oxyder.

TABLEAU 9

| Concentrations relatives en oxygène et en azote pour le catalyseur Pd (0,75%)/Si$_3$N$_4$ dans les différents états | | |
|---|---|---|
| ETAT | $[O_s]/[Si_s]$ | $[N_s]/[Si_s]$ |
| état 1 | 0,19 | 0,99 |
| état 2 | 0,24 | 0,98 |
| état 3 | 0,41 | 0,82 |

Contrairement à d'autres composés du silicium, le nitrure de silicium résiste bien à l'oxydation.

- Etat électronique du palladium

Le tableau 10 présente les énergies de liaison des électrons 3d5/2 du palladium et les largeurs à mi-hauteur des pics Pd3d5/2 dans les différents états des deux catalyseurs. Les effets de charge sont corrigés en prenant comme référence l'énergie des électrons 1s de l'azote à 397,6 eV pour le nitrure de silicium et 2p de l'aluminium à 74 eV pour l'alumine.

Pour le solide Pd/α-Al$_2$O$_3$, l'énergie de liaison est quasiment identique quelque soit le traitement appliqué au catalyseur. Le palladium reste donc à l'état zérovalent. Cependant un élargissement non négligeable est observé en état 3 qui traduit probablement la présence de palladium oxydé. Dans le cas du solide Pd/Si$_3$N$_4$, l'énergie de liaison de 336,1 eV sur le catalyseur frais diminue après les vieillissements sous le mélange réactionnel. Le retour de l'énergie de liaison du niveau Pd3d5/2 vers une valeur caractérisant du palladium zérovalent peut s'expliquer par le frittage des particules. En effet, le déplacement électronique sur le catalyseur frais, probablement induit par un effet de support, ne serait plus visible à la surface de particules plus grosses. Les largeurs de pic, presque constantes et de l'ordre de 2 eV, semblent indiquer qu'il existe un seul état du palladium après les traitements sous le mélange réactionnel.

TABLEAU 10

| Energies de liaison des électrons 3d5/2 du palladium et largeur à mi-hauteur des pics Pd3d5/2 des catalyseurs dans les différents états | | | | | |
|---|---|---|---|---|---|
| catalyseur | état 1 | | état 2 | | état 3 | |
| Pd/α-Al$_2$O$_3$ | 335,1 eV | 1,9 eV | 335,2 eV | 1,9 eV | 335,2 eV | 2,5 eV |
| Pd/Si$_3$N$_4$ | 336,1 eV | 2 eV | 335,6 eV | 1,8 eV | 335,4 eV | 2,1 eV |

En conclusion, à caractéristiques initiales presque équivalentes, le catalyseur Pd/Si$_3$N$_4$ est plus actif que le catalyseur Pd/α-Al$_2$O$_3$ vis à vis de la réaction d'oxydation du méthane, et ce quels que soient les traitements de vieillissement appliqués aux deux solides. Il existe donc un effet de support très marqué.

Le nitrure de silicium a montré notamment par rapport à des essais réalisés sur le carbure de silicium d'excellentes propriétés de résistance à l'oxydation au cours de la réaction. En effet, même après un vieillissement jusqu'à 800°C sous le mélange réactionnel l'oxydation de la surface reste modérée, ce qui empêche une désactivation par un enrobage de la phase active par la silice.

Les différences de réactivité entre palladium déposé sur alumine et sur nitrure de silicium sont, au vue des caractérisations effectuées après réaction, difficilement explicables. La perte de surface métallique par frittage est en effet globalement identique pour les deux matériaux. Les sites à la surface du palladium déposé sur nitrure de silicium sont par conséquent plus actifs que ceux qui sont en surface du Pd/α-Al$_2$O$_3$.

Les mesures en photoémission montrent des différences entre les deux catalyseurs pour les propriétés électroniques et pour la morphologie des particules de palladium. A surface exposée identique, la quantité relative de palladium mesurée en photoémission est en effet différente et semble indiquer un frittage conduisant à des particules n'ayant pas la même forme sur l'un ou l'autre des supports.

**EP 1 024 897 B1**

## BIBLIOGRAPHIE

**[1]** V.I. Simagina, T.F. Nokhrina, N.N. Kundo, G.D. Nalivka, Otkrytiya, Izobret. Prom. Obraztsy, Tovarnye Znak (1984) 22, 28-29
**[2]** S. Brunauer, P. H. Emmet er E. Teller, J. Am. Chem. Soc., 60 (1938) 309
**[3]** Y. Soma Noto et W. M. H. Sachtler, J. Catal., 32 (1974) 315
**[4]** F. G. Dwyer, Catal. Rev. Sci. Eng., 6 (1972) 261
**[5]** Handbook of Chemistry, C. R. C. Press, R. C. WEAST Ed., 56th Edition, 1975-1976, p. F224-226
**[6]** M. Boudart et G. Djeda-Mariadassou, Cinétique des réactions en catalyse hétérogène., Ed. Masson, (1982) 165
**[7]** J. A. Taylor, G. M. Lancaster et J. W. Rabelais., J. Electron.Spectrosc. Relat. Phenom., 13 (1972) 755
**[8]** L. Lozzi, L. Passacantando, P. Picozzi, S. Santucci, G. Tomassi, R. Alfonsetti et A. Borghesi, Surf. Interface. Anal., 22 (1994) 190
**[9]** K. Le Bas, Thèse de doctorat, Lyon (1980)

## Revendications

**1.** Procédé de combustion d'un hydrocarbure, selon lequel on dispose d'un catalyseur solide comprenant une phase métallique active, et un support catalytique réfractaire à base de nitrure de silicium sur lequel la phase active est déposée,

**caractérisé en ce que** le support catalytique comprend au moins 90% de nitrure de silicium, non poreux et pulvérulent, dans sa forme α**, et en ce que** la température de réaction est contrôlée à une valeur comprise entre 200°C et 800°C.

**2.** Procédé selon la revendication 1, **caractérisé en ce que** l'hydrocarbure est un alcane.

**3.** Procédé selon la revendication 2, **caractérisé en ce que** l'hydrocarbure est le méthane.

**4.** Procédé selon l'une quelconque des revendications 1 à 3, **caractérisé en ce que** le support est sous forme discrète, dont la taille des particules est comprise entre 0,1 et 1 μm.

**5.** Procédé selon l'une quelconque des revendications 1 à 4, **caractérisé en ce que** la phase métallique active comprend au moins un métal de transition.

**6.** Procédé selon la revendication 5, **caractérisé en ce que** la phase métallique active est du palladium.

**7.** Procédé selon l'une quelconque des revendications précédentes, **caractérisé en ce que** ledit support catalytique présente une aire spécifique comprise entre 5 et 20 m$^2$/g.

**8.** Procédé selon l'une quelconque des revendications précédentes, **caractérisé en ce que** le rapport de la proportion pondérale du métal de la phase active à celle du silicium du support est comprise entre 0,5 et 2 % en poids.

**9.** Procédé selon l'une quelconque des revendications précédentes, **caractérisé en ce que** le catalyseur est obtenu par imprégnation du support par des sels métalliques, puis activation.

**10.** Procédé selon la revendication 9, **caractérisé en ce que** les sels métalliques sont des sels acétylacétonate.

## Claims

**1.** Process for the combustion of an hydrocarbon, according to which there is available a solid catalyst comprising an active metal phase and a refractory catalytic support based on silicon nitride on which the active phase is deposited,

**characterized in that** the catalytic support comprises at least 90% of non-porous pulverulent silicon nitride in its α form, and **in that** the reaction temperature is controlled at a value of between 200°C and 800°C.

**2.** Process according to Claim 1, **characterized in that** the hydrocarbon is an alkane.

**3.** Process according to Claim 2, **characterized in that** the hydrocarbon is methane.

**4.** Process according to anyone of Claims 1 to 3, **characterized in that** the support is in the discrete form, the size of the particles of which is between 0.1 and 1 $\mu$m.

**5.** Process according to anyone of Claims 1 to 4, **characterized in that** the active metal phase comprises at least one transition metal.

**6.** Process according to Claim 5, **characterized in that** the active metal phase is palladium.

**7.** Process according to anyone of the precedent Claims, **characterized in that** said catalytic support exhibits a specific surface of between 5 and 20 $m^2/g$.

**8.** Process according to anyone of precedent Claims, **characterized in that** the ratio of the proportion by weight of the metal of the active phase to that of the silicon of the support is between 0.5 and 2% by weight.

**9.** Process according to anyone of precedent Claims, **characterized in that** the catalyst is obtained by impregnating the support with metal salts and then activating.

**10.** Process according to Claim 9, **characterized in that** the metal salts are acetylacetonate salts.


**Patentansprüche**

**1.** Verfahren zum Verbrennen eines Kohlenwasserstoffes, bei dem ein fester Katalysator, der eine aktive metallische Phase aufweist, bereitgestellt wird, und ferner ein hitzebeständiger katalytischer Träger auf Basis von Siliciumnitrid, auf dem die aktive Phase aufgebracht ist,
    **dadurch gekennzeichnet, dass** der katalytische Träger zumindest 90 % an nicht porösem und pulverförmigem Siliciumnitrid in seiner $\alpha$-Modifikation aufweist, und dass die Reaktionstemperatur auf einen Wert zwischen 200°C und 800°C geregelt wird.

**2.** Verfahren nach Anspruch 1, **dadurch gekennzeichnet, dass** der Kohlenwasserstoff ein Alkan ist.

**3.** Verfahren nach Anspruch 2, **dadurch gekennzeichnet, dass** der Kohlenwasserstoff Methan ist.

**4.** Verfahren nach einem der Ansprüche 1 bis 3, **dadurch gekennzeichnet, dass** der Träger in Teilchenform vorliegt, wobei die Teilchengröße zwischen 0,1 und 1 $\mu$m liegt.

**5.** Verfahren nach einem der Ansprüche 1 bis 4, **dadurch gekennzeichnet, dass** die aktive metallische Phase zumindest ein Übergangsmetall enthält.

**6.** Verfahren nach Anspruch 5, **dadurch gekennzeichnet, dass** die aktive metallische Phase Palladium ist.

**7.** Verfahren nach einem der vorhergehenden Ansprüche, **dadurch gekennzeichnet, dass** der katalytische Träger eine spezifische Oberfläche zwischen 5 und 20 $m^2/g$ aufweist.

**8.** Verfahren nach einem der vorhergehenden Ansprüche, **dadurch gekennzeichnet, dass** der Gewichtsanteil des Metalls der aktiven Phase bezüglich des Siliciums des Trägers zwischen 0,5 und 2 Gew.-% liegt.

**9.** Verfahren nach einem der vorhergehenden Ansprüche, **dadurch gekennzeichnet, dass** der Katalysator durch Imprägnieren des Trägers durch metallische Salze gefolgt von einer Aktivierung erhalten wird.

**10.** Verfahren nach Anspruch 9, **dadurch gekennzeichnet, dass** die Metallsalze Acetylacetonatsalze sind.

FIG 1

FIG 2A

2h
350°C

12h

2h
300°C

3h

25°C

25°C 4h

oxygène argon hydrogène argon

FIG 2B

2h
400°C

12h

25°C

25°C

argon

# FIG 3

# FIG 4

# FIG 5A

# FIG 5B

## FIG 6A

## FIG 6 B

FIG 7A

FIG 7B

FIG 8